# EUROPEAN PATENT SPECIFICATION

(11) **EP 2 491 282 B1**
(45) Date of publication and mention of the grant of the patent: **10.03.2021**
(21) Application number: 10825281.8
(22) Date of filing: 07.10.2010
(51) Int. Cl.: F16K 5/20, F16K 5/06, F16K 5/08, F16K 27/06

(54) **TURNING VALVE FOR A MEASURING DEVICE**
DREHVENTIL FÜR EINE MESSVORRICHTUNG
ROBINET TOURNANT POUR DISPOSITIF DE MESURE

(30) Priority: 20.10.2009 SE 0950775
(43) Date of publication of application: 29.08.2012
(73) Proprietor: Aktiebolaget Somas Ventiler, 661 23 Säffle (SE)
(72) Inventor: MORICHETTO, Peter, 662 31 Åmål (SE)
(74) Representative: Johansson, Lars E.
(86) International application number: PCT/SE2010/051085
(87) International publication number: WO 2011/049510

(56) References cited:
- US-A- 4 628 732
- US-A- 5 134 879
- US-A- 5 905 213

## Description

### TECHNICAL FIELD

A valve housing for a measuring device which valve housing comprises a valve assembly and a mounting flange assembly, wherein the valve assembly comprises a valve body and wherein the valve body has a bottom surface defining a boundary surface of a process, said bottom surface comprising an opening towards said process, said assembly further having a centre segment with a probe cavity therethrough for receiving a measuring device, and closing means for opening and closing said valve.

### BACKGROUND ART

Measurements of physical properties often represent a crucial part of industrial processes, and several solutions exist of how such measurements may be performed. Examples of physical properties of interest could be temperature, pressure, flow rate, pH value and oxygen content. In particular, many processes require measurement of physical properties of a fluid substance in a closed pipe line or the like, which brings about the problem that a sensor must be brought into contact with the process substance, preferably without interrupting the flow in the pipe.

A connecting device for measurements in a pipe line is disclosed in patent US 4,628,732 wherein a sensor is affixed to a selector member which, in its turn, communicates with a process inside a pipe line. The selector member has a measuring and closing portion which is sphere shaped, and comprises a central hole for inserting the measuring instrument. The connecting device according to US 4,628,732 is attached to a pipe by means of welding which is laborious and, furthermore, the welding leads to that the aperture becomes permanently fastened to the pipe and thereby hard to replace. According to one alternative version of the connecting device in US 4,628,732 said selector member is platelike. This embodiment results in a valve which is hard to seal and leads to the risk of leakage.

Another measuring system is shown in US 5,134,879 where an access valve is connected to a process port in a pipe. When measuring the physical properties of the process a sample probe is introduced through the access valve and enters the fluid process stream. After measurement the probe is withdrawn and the access valve is closed. The described method has the disadvantage that the introduced sample probe will disrupt the flow in the pipe. Moreover, the sample probe will be subject to cavitation damage when positioned inside the pipe line which of course is undesirable since it increases the wear on the equipment.

A common problem related to measuring valves such as the one in US 5,134,879, as well as to valves in general, is that replacement or maintenance of the measuring instrument might interrupt the process. Furthermore, part of the substance to be measured might escape from the pipe line during these actions which in particular poses a problem during measurements on high-pressure processes. It is of absolute importance that no material is released from the pipe at any time since the materials might be e.g. highly corrosive, hot or harmful in other ways.

It would be desirable to have a valve which enables for measurements with minimal interference of the process to be measured, that is easily maintained and does not risk any leakage from the pipe (e.g. during cleaning of the valve) and protects the sample probe from exposure to wear.

### DISCLOSURE OF THE INVENTION

It is an object of the present invention to solve, or at least to minimise the above mentioned problems. This is achieved by a valve housing as defined in claim 1. Preferred embodiments of this valve housing are defined in the dependent claims. According to claim 1, a centre segment is rotationally mounted into said valve body and the movement for opening/closing said valve is a rotary movement of said centre segment around a centre axis. Thereby, a smooth and controlled closing of the valve is possible, minimising the risk for leakage from the process as well as the risk for disturbing the process by the movement of the valve.

It is understood that "boundary surface of a process" may signify any surface shielding off some sort of content from the surrounding, e.g. a pipe line or the like, and that "process" means the content in e.g. a pipe line, like for instance paper pulp, oil or black liquor.

According to an aspect of the invention, said centre segment and said valve body cooperate in such a way that the opening of said probe cavity through the centre segment may be positioned adjacent to said opening, thus defining an open measuring position of the valve assembly. Thereby, by placing a measuring probe into said cavity, an open position where only a measuring section of the probe itself is in contact with the process can be achieved, leading to the rest of the probe being protected by the valve housing meaning that the wear on the instrument due to use in harsh industrial environments can be minimised.

It is understood that measuring position and an open position refer to the same state, namely when the cavity in the centre segment is coaxial with the opening at the arcuate bottom surface, and that a closed position refers to a position where the opening of the cavity (and thereby the measuring probe) is covered by the arcuate bottom surface itself.

According to another aspect of the invention, said valve body and said centre segment cooperate in such a way that said opening of said valve body is covered and sealed by a lower surface of said centre segment, thus defining a closed position of the valve assembly. Thereby, the end of the probe will be protected from the process and thanks to the lower surface of the centre segment covering the opening, the probe itself can be removed from the valve assembly without risking a leakage from the process.

According to yet another aspect of the invention, said bottom surface is an arcuate surface, and said lower surface of the centre segment is an arcuate surface which is arranged to match the arcuate bottom surface. Thereby, a valve body will have a shape and dimension that is carefully adapted to the form of the centre segment, and upon mounting the two together the bottom surface and the lower surface will interact to form one sealed unit. The risk for a leakage from the pipeline into the surrounding area can thereby be substantially lowered, and the covering of the opening referred to in the paragraph above can be substantially improved.

According to a further aspect of the invention said opening of said bottom surface is facing in a direction between -55° and 55°, preferably between -20° and +20°, more preferably between -5 and +5°, with respect to a direction that is perpendicular to the direction of a flow of the process. Thereby, the measuring surface of the probe can be chosen to face in different directions, from directly towards the flow direction (+20°) to a neutral position (0°) perpendicular to the flow, and further on to a position turned away from the flow (-20°). The direction of the probe can also be fixed to face in any direction between these described herein. Said orientation of the through hole also enables for the closing movement to be a rotational movement as previously described.

According to yet another aspect of the invention said centre segment comprises at least two channels protruding through said centre segment and with their respective openings at said lower surface. By coupling a flow of a suitable fluid such as water to a first inlet channel and a fluid outlet to a second outlet channel, a stream of fluid can be created at the intersection between the lower surface of the centre segment and the arcuate bottom surface of the valve body. In order to guide the fluid at this intersection, said bottom surface comprises grooves connecting the inlet channel with the outlet channel. When a fluid is introduced through the inlet channel it will run through the centre segment, run through said groove at the intersection between the lower surface and the bottom surface and finally be evacuated from the valve through said outlet channel. The fluid may be transported through the system in any conventional way such as with a pump.

An arrangement with channels as previously described will have a dual function: a cleaning and a cooling function. By choosing the course of the grooves it is possible to guide the water in a specific pattern along the intersection area. Preferably the grooves are arranged in such a way that at the measuring position the fluid is supplied in order to cool the valve and the measuring device, whereas at the closed position the fluid is guided in order to clean the end surface of the probe by means of washing.

According to a further aspect of the invention, said centre segment is rotatably mounted to said valve body by a cover plate. Thereby, the centre segment is firmly held into place by the cover plate, but is at the same time rotationally movable with respect to the valve body, resulting in a well-defined and controlled movement while at the same time securing the various components into place.

According to yet another aspect of the invention said valve assembly comprises a closing means preferably in the form of a turning handle. When switching between a measuring and a closed position an operator of the turning valve will grab the turning handle and pushes/pulls the centre segment in a rotational movement until a desired position is acquired. Preferably the distance between a measuring and a closed position corresponds to turning the valve housing at least 80°, preferably at least 100°, more preferably at least 120° around the centre axis. This will ensure that the opening/closing of the valve will be performed in a smooth and controlled way which in its turn minimizes the risk that any content will escape from the interior of the pipe line.

According to yet another aspect of the invention the turning valve comprises locking means. This can be in the form of a security pin that is fixed onto the cover plate and can be projected into either of two matching pinholes in the centre segment of the valve housing. One of said pinholes defines a closed position, and the other pinhole defines a measuring position. Once the centre segment is turned in to either of the two positions (closed or measuring respectively), the security pin will snap into the corresponding pinhole holding the valve assembly in place. Before being able to turn the centre segment, the security pin must be retracted from the pinhole. Consequently, the centre segment will not accidently glide out of place.

According to yet another aspect of the invention the turning valve has a safety device in the form of a safety bar that will prevent detachment of the probe when the turning valve is in a measuring position. Said safety bar is arranged in a curve along the side of an attached probe which, in its turn, comprises a loophole matching the safety bar. When the centre segment and the probe moves from a closed to a measuring position the safety bar will enter the loophole of the probe preventing it from leaving the probe cavity.

According to yet another aspect of the invention a direction locking flange for locking said valve body to said mounting flange assembly is provided, said direction locking flange having an upper surface, which upper surface is a graduated arc/protractor. Thus, when turning the valve body the rotation can be monitored by comparing with the graduated arc upon the direction locking flange.

According to a further aspect of the invention at least one sealing device is interposed between said valve body and said centre segment. Thereby, the risk for leakage from the process can be further minimised.

According to yet another aspect of the invention, at least one sealing is interposed between said measuring device and said cavity through the centre segment. Thereby, the risk for leakage along the measuring probe when the valve assembly is in an open position and the end of the probe is exposed to the process can be further minimised.

### BRIEF DESCRIPTION OF THE DRAWINGS

The process will hereinafter be described in more detail with reference to the appended drawings. The following description should be considered as preferred form only, and is not decisive in a limiting sense.
- Fig. 1: shows a perspective view of a valve assembly according to a preferred embodiment of the invention in an open position,
- Fig. 2: shows an exploded perspective view of the valve assembly of Fig. 1,
- Fig. 3A-C: shows the bottom surface of the valve assembly in suitable positions with reference to a flow direction in the pipe,
- Fig. 4A: shows a perspective view of the valve assembly in the direction of flow inside the pipe,
- Fig. 4B: shows a cross-sectional view of the valve assembly of Fig. 4A along the line IV-IV,
- Fig. 5A: shows a perspective view of the valve assembly without a probe in a closed position,
- Fig. 5B: shows a perspective view of the valve assembly with a probe in a closed position,
- Fig. 5C: shows a perspective view of the valve assembly with a probe in a middle position,
- Fig. 5D: shows a perspective view of the valve assembly with a probe in an open position,
- Fig. 6A: shows the bottom surface of a valve assembly with a probe in an open position, and
- Fig. 6B: shows the bottom surface of a valve assembly with a probe in a closed position.

### DETAILED DESCRIPTION OF THE INVENTION

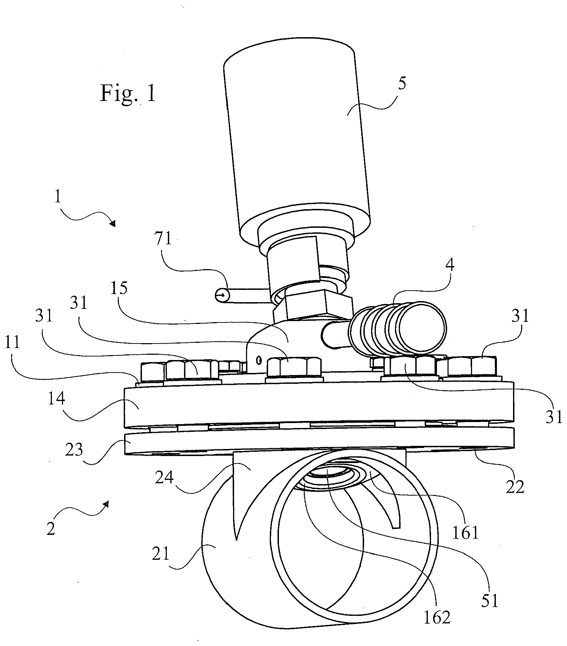

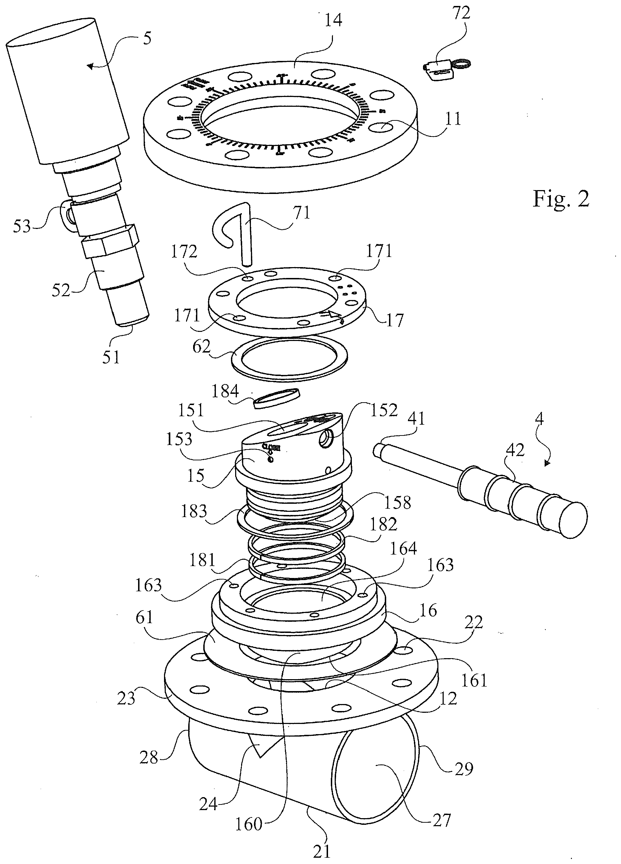

In Fig. 1 is shown a perspective view of a preferred embodiment of a valve assembly 1 according to a preferred embodiment of the invention, where a valve body 16 is mounted on a mounting flange assembly 2 comprising a mounting flange 23 that is attached to a pipe section 21. The mounting of said valve body 16 is effectuated by a number of fastening means in the form of screws 31 that are fastened through a series of through holes 11 (see Fig. 2) in a direction locking flange 14 and matching holes 22 in a mounting flange 23 of the mounting flange assembly 2. A centre segment 15 is mounted into said valve body 16. The valve assembly 1 together with the mounting flange assembly 2 can be referred to as a valve housing 1, 2.

The valve assembly 1 also comprises a closure means 4 for closing and opening the valve assembly, mounted on the centre segment 15 that is placed through the direction locking flange 14. A probe 5 can be arranged to protrude through a central probe cavity 151 (see Fig. 2) in said centre segment 15 and reach an opening 162 in the bottom surface 161 of the valve body 16 that faces the interior of the pipe 21 so that a probe end 51 of the probe 5 in the open position shown in the figure is exposed to the interior of said pipe 21.

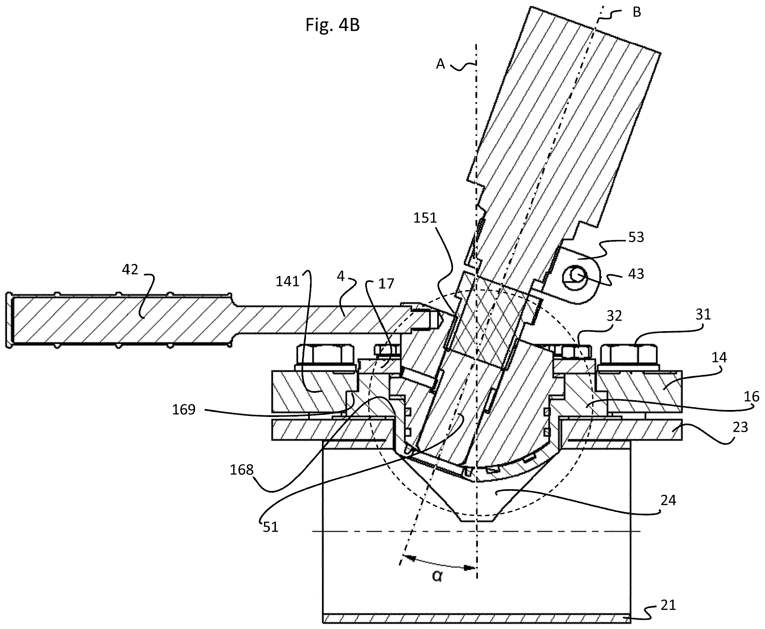

The shape of the cavity 151 allows for the placement of the probe 5 so that an angle α is created between an axis B along the direction of the probe 5 and perpendicular to the opening 162 of said bottom surface, and a centre axis A that extends through the centre segment 15 and that is perpendicular to the flow direction of the contents of the pipe section 21 (see Fig. 4B). Thanks to this angle α, an end 51 of the probe 5 can interact with said contents at an adjustable angle, as will be described further below. Said bottom surface 161 also protects the probe end 51 at a desirable degree, mainly by being curved to form an arcuate shape, thus enabling the probe end 51 to interact directly with the flow while at the same time being shielded from the possibly detrimental effects of the process.

The valve assembly 1 also comprises locking means 71 in the form of a safety bar that serves to prevent the probe 5 from being accidentally removed while the valve assembly is in its open position. In order to accommodate the valve assembly, the pipe segment 21 has an extended section 24 through which an arcuate surface 161 of a valve body 16 of the valve assembly 1 can be mounted into a central opening 12 so that the probe end 51 through an opening 162 can be exposed to any substance with which the interior of the pipe 21 is filled.

Fig. 2 shows an exploded perspective view of the valve assembly of Fig. 1, where all the individual parts of the assembly can be seen. These parts will now be described more closely, and the mounting process also described with reference to this Figure.

The pipe segment 21 has an interior 27 in which a substance such as a fluid or a gas can be transported. A first end 28 and a second end 29 can be mounted onto other pipe segments (not shown) in order to create a pipeline for use in an industry, for instance, and the dimensions of the pipe segment 21 can be altered in order for this segment 21 to have the same dimensions as other pipe segments so that a smooth transition along the pipeline can be achieved.

The perpendicular section 24 is an integrated part of the pipe segment 21 and serves, together with the mounting flange 23 that is also integrated with the pipe segment 21 in this embodiment, to allow for a reliable and convenient mounting of the valve assembly 1 and to provide access for a therein mounted probe 5 to the interior of the pipe segment 21. Adjacent to the mounting flange 23, a gasket 61 serves to create a seal between the mounting flange 23 and the valve body 16.

A valve body 16 has on its lower end the arcuate surface 161 with the opening 162 and can be placed in a central through hole 12 of the mounting flange assembly 2 so that this surface 161 and opening 162 can be inserted into the interior 27 of the pipe segment 21. The valve body 16 also comprises holes in the form of bores 163 into which a locking means in the form of screws, for instance, can be inserted in order to lock a cover plate 17 with corresponding bores 171 onto the body 16 in order to fasten the centre segment 15 and thereby seal the different parts of the valve assembly 1 together.

The centre segment 15 of the valve housing is adapted to be inserted into a central cavity 164 of the valve body 16 and has a probe cavity 151 that protrudes all the way through said centre segment 15 at an angle to the length of the centre segment 15. In order to prevent leakage from the pipe segment 21 out through the valve assembly, a valve seat 184 is placed at the bottom of the valve body 16 and provide a seal between the valve body 16, and the centre segment 15. For additional protection, gaskets, for instance, in the form of sealing rings 181, 182, are provided to be inserted between the walls of the central cavity 164 of the valve body 16 and the centre segment 15. Spacers 183 and 62 are also provided for enabling a rotation of the centre segment 15 relative to the valve body 16, and there can be additional seal devices such as gaskets in order to further prevent a leakage.

Thus, the mounting flange assembly 2 is constructed from a number of components that can be mounted in the manner described herein, and thanks to this construction the mounting and de-mounting of the valve assembly 1 can be performed in an easy and convenient manner. Thanks to the relatively large surfaces of the assembly 1 placed together, such as the centre segment 15 and the valve body 16, simple devices such as the gaskets in the form of sealing rings described above can be used in order to prevent leakage. No welding together of the components is necessary, and any specific component can easily be repaired or replaced without requiring the replacement of the entire valve assembly 1.

In order to lock the parts of the assembly 1 into place, the cover plate 17 is mounted on the valve body 16 by the use of suitable sealing devices such as screws 32 (not shown), as has previously been mentioned, and to enable rotation of the centre segment 15, a second spacer 62 is placed between said cover plate 17 and said valve body 16, as has also been previously mentioned.

A second seal is achieved by the direction locking flange 14 being mounted on the mounting flange 23 of the mounting flange assembly 2 with the first gasket 61 placed between them, as has also been described above.

A closure means 4 in the form of a rod is placed into a bore 152 on the centre segment and fastened, for instance by threads on the interior surface of this bore 152 corresponding to threads on the exterior of an inner end 41 of said rod 4. The rod 4 has a handle 42 suitable for gripping by a user, and functions as a lever which is long enough for the opening and closing motion of the valve assembly 1 to be performed by using only moderate force, thereby allowing the user a large degree of control over the operation of the valve assembly 1.

A locking means 71, for preventing removing of the probe 5 while the valve assembly is in an open position, is placed in a hole such as a bore 172 on the cover plate 17 and is matched by a loop 53 on the side of the probe 5. Thereby, the pulling out of the probe 5 is prevented by the locking means 71 being inside the loop 53 in the positions of the valve assembly where a removal of this probe 5 would be unsuitable and provide a risk for leakage from the pipe section 21.

A second safety device in the form of a safety pin 72 is also fastened on the cover plate 17 and can protrude into one hole 153 on the centre segment 15 corresponding to a closed position of the valve assembly, and another hole 154 (not shown) corresponding to an open position. Thereby, the turning of the centre segment 15, and thereby the opening or closing of the valve assembly, can be prevented by the presence of this safety pin 72 and will require that a user first pulls the pin 72 before the rod 4 can be used in order to turn the centre segment 15 around an axis protruding straight down through the valve body 16. This can greatly decrease the risk of the valve assembly being opened or closed by mistake.

The mounting of the valve assembly will now be described.

In a first step, the valve seat 184 is mounted adjacent to the arcuate surface 161 of the valve body 16, and sealing rings 181, 182 are mounted on the centre segment 15 in grooves. Spacers 183, 62 are placed above and below the centre flange 155 of the centre segment 15, and the centre segment 15 itself is placed into the valve body 16. The valve seat 184 is now placed around the opening 162 in the arcuate surface 161 of the valve body 16.

Now, the locking means 71 is mounted into the bore 172, and the safety pin 72 is mounted onto the cover plate 17, and the cover plate 17 itself is mounted onto the valve body 16 and centre segment 15 by using screws and spacers placed through the bores 171.

In a second step, the gasket 61 is placed onto the mounting flange 23 that is already fastened onto a pipe segment 21, and the valve body 16 is placed into the central opening 12 in such a way that a lower part 160 of the valve body 16 is inserted into the central opening 12, and the gasket 61 is fastened between the mounting flange 23 and an upper part of the valve body 16.

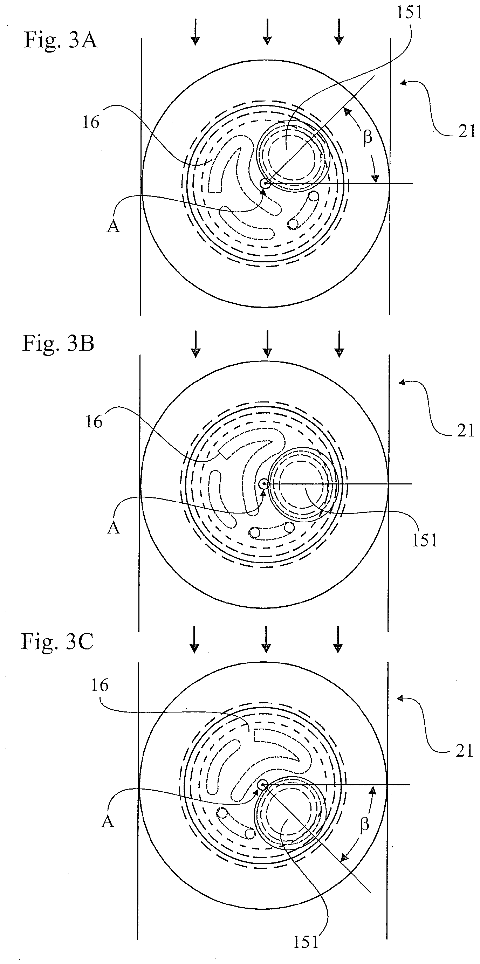

The direction locking flange 14 can now be mounted onto the valve body 16 and the mounting flange 23 and fastened by screws through the holes 11, and thereby serves to fix the valve body onto the mounting flange 23 in a secure and reliable manner. In this step, the valve body 16 can be rotated around the axis A in order to choose a suitable angle β with respect to a reference axis perpendicular to axis A and locked in position. The angle β is considered to be 0° when the opening 162 in the valve body 16 is placed transversal to the pipe 21 (see Figs. 3A-C).
The rod 4 is mounted, by the inner end 41 of said rod 4 being mounted into the bore 152 of the centre segment 15, for instance by screwing.

In a third step, the probe 5 is mounted into the now mounted valve assembly 1, and the valve assembly 1 is ready for use.

Figs. 3A, 3B and 3C show different mountings of the valve assembly 1, where the valve body 16 is adjusted to create different angles β between the probe end 51 in an open position of the assembly and the flow inside the pipe 21. This angle β can vary from the position shown by Fig. 3A, where the opening is turned towards the flow, via a position of Fig. 3B with the opening at a reference level of 0°, i.e. perpendicular to the flow direction in the pipe segment 21, to the position of Fig. 3C with the opening turned away from the flow. Any angle between these positions shown in the figures may also be chosen, and if desired β may vary 360°.

As an additional advantage, by leaving the safety pin 72 in its hole 153, the centre segment 15 can easily be rotated with respect to the mounting flange assembly 2, after the locking flange 14 has been loosened. This way the angle β can be adjusted.

The valve assembly has now been mounted, and by inserting a probe 5 and opening or closing the valve using the rod 4 to rotate the centre segment 15 in the cavity of the valve body 16, can be put into operation.

Since all the different parts of the valve assembly 1 are easily removable, the repair and cleaning of the valve assembly 1 is greatly simplified. Thanks to the presence of sealing devices such as sealing rings, any leakage from the pipe can still be prevented or at least minimised.

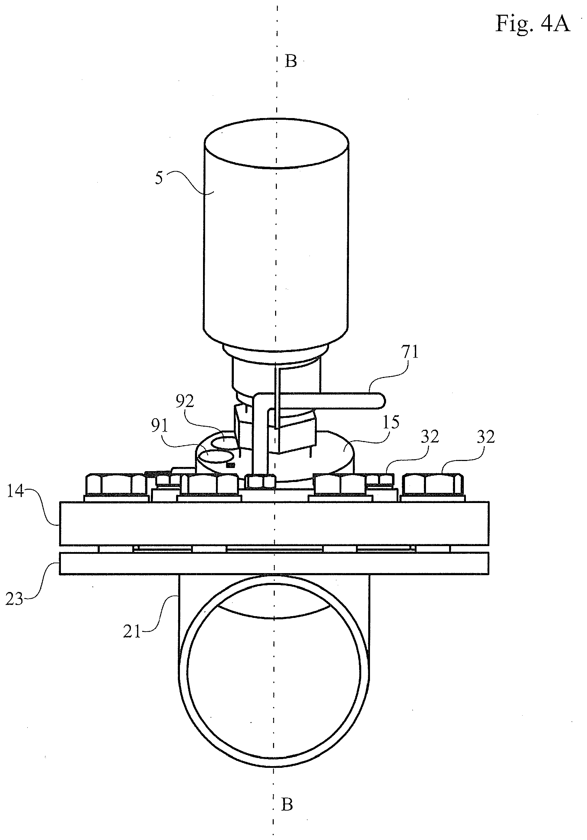

Fig. 4B shows a cross-sectional view of the valve assembly, taken along the line B-B in Fig. 4A. On the pipe section 21, the mounting flange assembly 2 with the mounting flange 23 is joined with the direction locking flange 14 by the screws 31, pressing the direction locking flange 14 against the first gasket 61. The direction locking flange 14 has a edge 141, extending around the central opening of said locking plate 14 and interacting with another flange 169 that is placed circumferentially on the valve body 16 in such a way that the first edge 141 presses the second flange 169 firmly towards the mounting flange 23, with the effect that the direction locking flange 14 holds the valve body 16 in place. Thereby, leakage between the valve body 16 and the pipe section 21 is prevented. The locking plate 14 can easily be removed from the valve body 16.

Similarly, the cover plate 17 is attached to the valve body 16 by the use of screws 32 in such a way that said cover plate 17 also covers a centre flange 155 that rests on the spacer 183 placed on a third flange 168 of the valve body 16 and is covered by the second spacer 62. Thereby, the centre segment 15 is effectively held in place by the cover plate 17 and this, together with the sealing rings 181, 182 placed into corresponding groves 156, 157 on the centre segment 15, prevents leakage from the opening 162 in the arcuate surface 161 and up between the outer surface of the centre segment 15 and the inner surface of the valve body 16.

Figs. 4B-C depict a valve assembly 1 where the probe 5 is in an open position i.e. when the opening 162 is placed directly adjacent to said probe cavity 151, and the probe 5 extends through this cavity 151 in such a way that the probe end 51 directly faces said opening 162. The probe cavity 151 extends along the axis B perpendicular to said opening 162 of said bottom surface 161 which together with centre axis A define an angle α (see Fig. 4B) corresponding to the angle of inclination of the probe 5

A person skilled in the art realises that the magnitude of angle α is set during manufacture of the valve assembly components, and further that it depends on the chosen position of the opening 162 in relation to the centre axis A. Preferably the maximum magnitude of angle α is ± 55°, more preferably ± 20°, even more preferably ±5°.

Referring to previous descriptions of angles α and β (Fig. 3A-C and Fig. 4B) it is understood that the position of the opening 162 in the arcuate surface 161 and the corresponding probe cavity 151 and its alignment can be described in terms of angles α and/or β. When knowing the magnitudes of α and β the direction in which the probe end 51 faces in relation to the direction of the flow of the process can be assessed, which may be important information during measurement using the valve assembly 1 according to the invention. A third way of defining the position of the probe end 51 is the angle γ (not shown) between the plane defined by the probe end surface and the flow direction. Angle γ depends directly on angles α and β.

The rod 4 with a handle 42 that is designed to be suitable for gripping by a hand, for instance with a rugged surface to prevent slipping, is now mounted into the centre segment 15 by the inner end 41 being fastened into the bore 152.

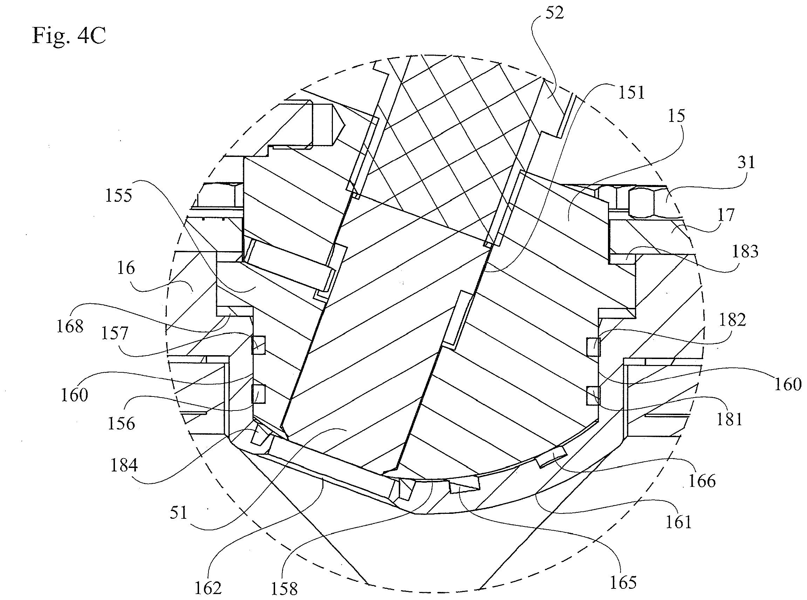

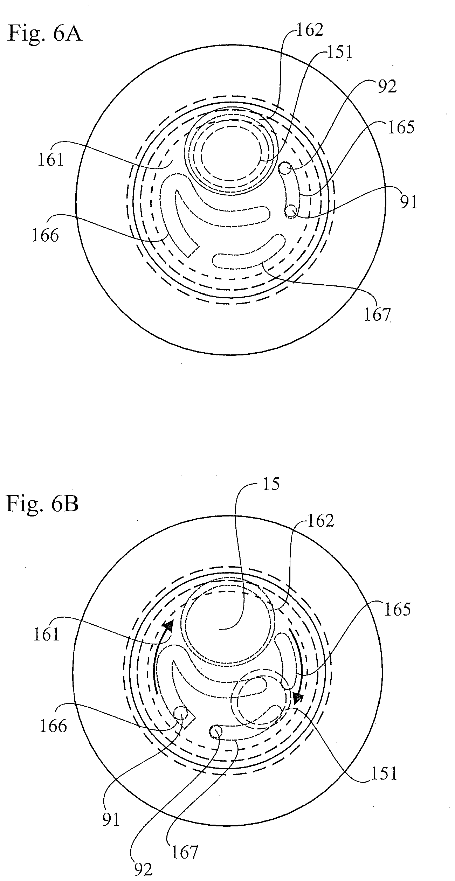

In Fig. 4C, cleaning grooves 165, 166, 167 can be seen on the upper side of the arcuate surface 161 These grooves, along with the cleaning and cooling effect that can be achieved by using them, will be described in detail with reference to Fig. 6A-B.

A probe shaft section 52 can be of a suitable width to seal off the probe cavity 151 effectively in order to prevent leakage from the pipe segment 21 through said probe cavity 151, or alternatively a separate sealing device can be present at any suitable location along the probe cavity 151 to achieve this sealing effect.

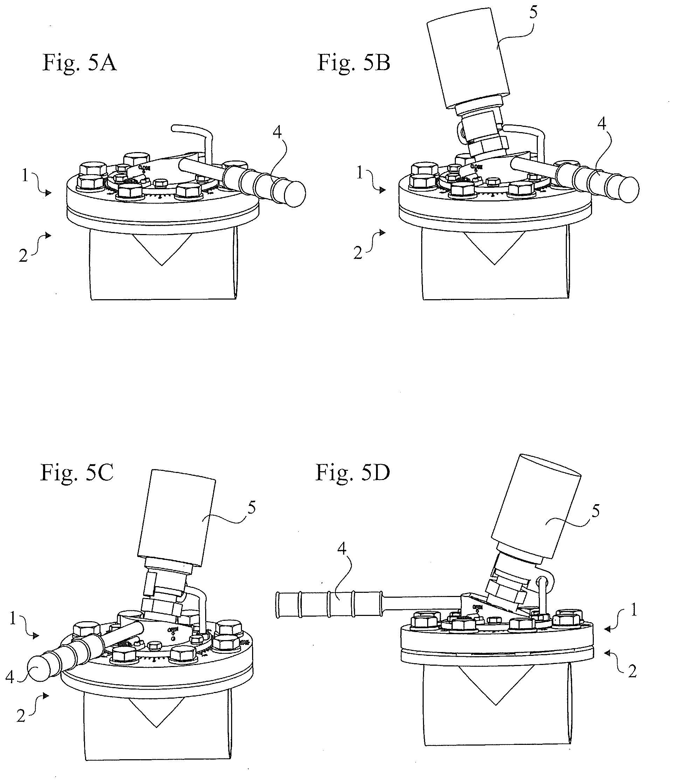

A preferred way of operating the valve assembly will now be described with reference to Fig. 5A-5D.

In Fig. 5A is shown a valve assembly according to the invention in a closed position without a probe 5. Preferably the upper surface of the direction locking flange 14 is marked like a protractor and will have an indicator of the angle β between the present position of the valve assembly 1 and the flow direction and/or angle γ between the probe end surface and the flow direction. Upon mounting the valve to a mounting flange assembly 2 of a pipe line 21 the indicated flow direction on the direction locking flange 14 is to correspond to the flow direction of the process in the pipe line 21. Being in a closed position the valve in Fig. 5A is secured into position by said safety pin 72 which is protruding into hole 153 of the centre segment 15. The probe cavity 151 through the centre segment 15 is directed in such a way that its opening is tightly covered by the bottom surface 161 of the valve body 16.

In the next step a measuring device in the form of a probe 5 is inserted through the cavity 151 in said centre segment 15. A closed valve assembly with an inserted probe is shown in Fig. 5B. When starting to move the valve into an open, measuring position, the safety pin 72 is retracted from the hole 153 and the centre segment 15 is turned clockwise in a rotational movement by pulling/pushing the closure means 4 in the form of a handle 42. In Fig. 5C is shown a valve assembly between a closed and a measuring position. In this position the locking means 71 is starting to enter the loop 53 of the probe 5 meaning that the probe will not be able to escape from the valve. Fig. 5D shows a valve assembly that has been turned into a measuring position. Here, the locking means 71 is completely secured within the loop hole 53 of the probe 5, and the safety pin 72 has snapped into a hole 154 in the valve body which corresponds to an open/measuring position of the assembly.

The direction (β and/or γ) of the opening 162 in relation to the flow direction inside the pipe 21 can be monitored by referring to the protractor at the upper surface of direction locking flange 14.

When opening/closing the valve, the lower surface 158 of the centre segment 15 will also get turned in relation to the fixed bottom surface 161 of the valve body 16. Thus, during opening the probe cavity 151 with the attached probe 5 will move from a position where the probe end 51 is shielded by the bottom surface 161, to a position where the probe cavity 151 will be aligned with the opening 162 in the bottom surface 161 that faces the interior 27 of the pipe 21. In this measuring position, as represented by Fig. 5D, the probe end is completely exposed to the content of the pipe line 21 and will record the physical properties it is designed to measure.

A full turn of the centre segment between a closed and a measuring position preferably corresponds to at least 80°, preferably at least 100°, more preferably at least 120°.

A preferred embodiment according to the invention is seen in Fig. 6A-B wherein is shown a cleaning/cooling system of the turning valve. Here, a valve is seen from underside with said arcuate surface 161 of a valve body 16 is protruding through mounting flange assembly 2. In the referred figures 6A-B said arcuate surface 161 is made transparent for illustrative purposes.

Fig. 6A shows the underside of a valve in a measuring position and Fig. 6B shows the underside of a valve in a closed position. In Fig. 6A the opening of the probe cavity 151 with a probe end 51 is aligned with the opening 162 in the arcuate surface 161. Three grooves 165, 166, 167 are stretched along said bottom surface 161 at the intersection between the lower surface 158 of the centre segment 15 and the inner side of said bottom surface 161. Two channels 91, 92 are protruding through said centre segment 15, a first inlet channel 91 and a second outlet channel 92. The end openings of the respective channels are facing the bottom surface 161 of the valve body 16, and are positioned in such a way that they meet said grooves. In a measuring position, as represented by Fig. 6A, the channels 91, 92 lead to groove 165. A water supply is coupled to said first inlet channel 91 and will pass through the centre segment 15 and further become transferred to the groove 165. This groove leads directly to the second outlet channel 92, exits the valve through the channel in the centre segment 15 and will be further lead to the sewage. By using cold water when flushing the turning valve, the assembly will be readily cooled.

In Fig. 6B is shown the underside of a valve assembly in a closed position, the opening of the probe cavity 151 being completely covered by the bottom surface 161. The hole 162 of the bottom surface 161 will expose a tightly sealed section of the lower surface 158 of the centre segment 15. As seen in Fig. 6B the openings of the inlet 91 and the outlet 92 channels are positioned in connection to grooves 166 and 167 respectively. Water will enter through the inlet channel and flow into and through the groove 166 and further passing by the opening of the probe cavity 151 with the exposed probe end 51, leading to a thorough cleaning thereof. From the opening of the probe cavity 151 the water will enter groove 167 which in its turn leads to said outlet channel 92 through which the cleaning water exits the valve. Simultaneous to cleaning the water circuit will also cool the valve assembly. It is advantageous that the grooves 166, 167 are placed in such a way that the way for the cleaning fluid from the probe end 51 to the outlet channel 92 is small, so that any remains from the process can be exposed of in a quick and reliable manner.

The valve seat 184 also serves to scrape the bottom surface of the centre segment 15 as the valve assembly is opened or closed. Thereby, any remains from the process that have stuck to the bottom of the centre segment can be removed and the cleaning with a cleaning fluid facilitated. An alternate cleaning movement, where the probe end 51 is scraped without the valve assembly 1 being moved to or from an open position, could alternately also be used. The cleaning itself, as well as the entire operation of the valve assembly 1, can be automated and take place without the need for intervention by an operator.

The described system will enable for an easy and fast cleaning/cooling of the valve assembly and without any risk of leakage.

It is to be noted that the order of the mounting steps suggested above can be varied within the scope of the claims and that the process can differ slightly between different embodiments of the invention.

It is advantageous to have the probe placed into the valve body 16 in an angle along with the centre segment 15, since this facilitates an opening and closing where the probe end is protected.

The invention is not to be seen as limited by the embodiments described above, but can be varied within the scope of the appended claims. For instance, the pipe line 21 may be separated from the mounting flange assembly 2, and said bottom surface 161 of the valve body 16, as well as the lower surface 158 centre segment 15, may be flat, or have any other shape. The pipe section upon which the valve assembly is mounted can be an entire length of a pipe, or could be a tank where a process can be contained. A pipe segment can be extended or have flanges at its end, and can be delivered together with the valve assembly or be a standard component. The valve body of the valve assembly can be fastened onto the pipe without the need for a flange, for instance by welding. The shape of the pipe segment can be different than that described above, for instance with an additional section such as a pipe extending out from the pipe section in order to facilitate measurement of pressure inside the pipe, or the sides of the pipe segment can be altered to allow for a higher or lower pressure at the site of measurements.

Furthermore the opening movement could be clockwise or it could be counter clockwise. Many other variations are also possible, as will be readily understood by the person skilled in the art.

## Claims

1. A valve housing (1, 2) for a measuring device,
which valve housing comprises a valve assembly (1) and a mounting flange assembly (2),
which mounting flange assembly comprises a mounting flange (23) attachable to a pipe section,
said valve assembly (1) comprising a valve body (16), wherein the valve body (16) has a bottom surface (161) that is arranged to define a boundary surface of a process, said bottom surface comprising an opening (162) towards said process,
said valve assembly (1) further having a centre segment (15) with a probe cavity (151) therethrough for receiving a measuring device (5), and
closing means (4) for opening and closing said valve,
**wherein** a direction locking flange (14) is mounted to said mounting flange assembly (2),
said valve body (16) is rotatably mounted in said mounting flange assembly (2), and
the direction locking flange (14) is arranged for locking the valve body (16) in position in the mounting flange with the opening (162) of the valve body (16) being arranged at a desired angle β with respect to a reference axis perpendicular to a centre axis (A) which extends through said centre segment and which centre axis (A) is normal to the plane of the mounting flange, and said centre segment (15) is rotationally mounted in said valve body (16) and the movement for opening/closing said valve is a rotary movement of said centre segment (15) around the centre axis (A).

2. A valve housing for a measuring device according to claim 1,
**characterised in that** said centre segment (15) and said valve body (16) cooperate by the centre segment (15) being adapted to be inserted into a central cavity (164) of the valve body (16) in such a way that an opening of said probe cavity (151) through the centre segment (15) may be positioned adjacent to said opening (162), thus defining an open measuring position of the valve assembly.

3. A valve housing for a measuring device according to claim 2,
**characterised in that** said centre segment (15) and said valve body (16) cooperate by the centre segment (15) being adapted to be inserted into a central cavity (164) of the valve body (16) in such a way that said opening (162) of said valve body (16) is covered and sealed by a lower surface (158) of said centre segment (15), thus defining a closed position of the valve assembly.

4. A valve housing for a measuring device according to claim 3,
**characterised in that** said bottom surface (161) of the valve body (16) is an arcuate surface and said lower surface (158) of the centre segment (15) is an arcuate surface which is arranged to match said arcuate bottom surface (161).

5. A valve housing for a measuring device according to claim 2,
**characterised in that** an angle α which is between -55° and 55°, preferably between -20° and +20°, more preferably between -5° and +5° is defined between the centre axis (A) and an axis (B) perpendicular to said opening (162) of said bottom surface (161).

6. A valve housing for a measuring device according to claim 1,
**characterised in that** said centre segment (15) comprises at least two channels (91, 92), preferably one first inlet channel (91) and one second outlet channel (92), with openings at said lower surface (158).

7. A valve housing for a measuring device according to claim 6,
**characterised in that** said bottom surface (161) comprises grooves (165, 166, 167).

8. A valve housing for a measuring device according to claim 1,
**characterised in that** said centre segment (15) is rotatably mounted to said valve body (16) by a cover plate (17).

9. A valve housing for a measuring device according to any previous claim,
**characterised in that** said valve assembly (1) comprises closing means in the form of a turning handle (4).

10. A valve housing for a measuring device according to any previous claim,
**characterised in that** said turning valve comprises locking means (71) for preventing an undesired rotation of the centre segment (15).

11. A valve housing for a measuring device according to any previous claim,
**characterised in** having a safety device (72) for preventing a removal of the probe (5) while the valve assembly is in an open position.

12. A valve housing for a measuring device according to any previous claim,
**characterised in that** said direction locking flange (14) has an upper surface, which upper surface is a graduated arc/protractor.

13. A valve housing for a measuring device according to any previous claim,
**characterised in that** at least one sealing device (181, 182, 183) is interposed between said centre segment (15) and said valve body (16) in order to prevent leakage from the process (21).

14. A valve housing for a measuring device according to any previous claim,
**characterised in that** at least one valve seat (184) is interposed between said centre segment (15) and said valve body (16) in order to prevent leakage from the process (21).

## Patentansprüche

1. Ventilgehäuse (1, 2) für eine Messvorrichtung,
wobei das Ventilgehäuse eine Ventilanordnung (1) und eine Montageflanschanordnung (2) umfasst,
wobei die Montageflanschanordnung einen Montageflansch (23) umfasst, der an einem Rohrabschnitt befestigt werden kann,
wobei die Ventilanordnung (1) einen Ventilkörper (16) umfasst, wobei der Ventilkörper (16) eine Bodenfläche (161) aufweist, die so angeordnet ist, dass sie eine Grenzfläche eines Prozesses definiert, wobei die Bodenfläche eine Öffnung (162) zu dem Prozess hin umfasst,
wobei die Ventilanordnung (1) ferner ein Mittelsegment (15) mit einem durch dieses hindurchgehenden Sondenhohlraum (151) zur Aufnahme einer Messvorrichtung (5) aufweist, und
Schließmittel (4) zum Öffnen und Schließen des Ventils,
wobei ein Richtungssperrflansch (14) an der Montageflanschanordnung (2) montiert ist,
der Ventilkörper (16) drehbar in der Montageflanschanordnung (2) montiert ist, und
der Richtungssperrflansch (14) zum Verriegeln des Ventilkörpers (16) in Position in dem Montageflansch angeordnet ist, wobei die Öffnung (162) des Ventilkörpers (16) in einem gewünschten Winkel β in Bezug auf eine Referenzachse senkrecht zu einer Mittelachse (A) angeordnet ist, die sich durch das Mittelsegment erstreckt, und wobei die Mittelachse (A) senkrecht zu der Ebene des Montageflanschs ist, und das Mittelsegment (15) drehbar in dem Ventilkörper (16) montiert ist und die Bewegung zum Öffnen/Schließen des Ventils eine Drehbewegung des Mittelsegments (15) um die Mittelachse (A) ist.

2. Ventilgehäuse für eine Messvorrichtung nach Anspruch 1, **dadurch gekennzeichnet, dass** das Mittelsegment (15) und der Ventilkörper (16) zusammenwirken, indem das Mittelsegment (15) so angepasst ist, dass es in einen zentralen Hohlraum (164) des Ventilkörpers (16) in einer Weise eingesetzt werden kann, dass eine Öffnung des Sondenhohlraums (151) durch das Mittelsegment (15) angrenzend an die Öffnung (162) positioniert werden kann, wodurch eine offene Messposition der Ventilanordnung definiert wird.

3. Ventilgehäuse für eine Messvorrichtung nach Anspruch 2, **dadurch gekennzeichnet, dass** das Mittelsegment (15) und der Ventilkörper (16) zusammenwirken, indem das Mittelsegment (15) so angepasst ist, dass es in einen zentralen Hohlraum (164) des Ventilkörpers (16) in einer Weise eingesetzt werden kann, dass die Öffnung (162) des Ventilkörpers (16) von einer unteren Fläche (158) des Mittelsegments (15) abgedeckt und abgedichtet wird, wodurch eine geschlossene Position der Ventilanordnung definiert wird.

4. Ventilgehäuse für eine Messvorrichtung nach Anspruch 3, **dadurch gekennzeichnet, dass** die Bodenfläche (161) des Ventilkörpers (16) eine bogenförmige Fläche ist und die untere Fläche (158) des Mittelsegments (15) eine bogenförmige Fläche ist, die so angeordnet ist, dass sie mit der bogenförmigen Bodenfläche (161) übereinstimmt.

5. Ventilgehäuse für eine Messvorrichtung nach Anspruch 2, **dadurch gekennzeichnet, dass** ein Winkel a, der zwischen -55° und 55°, bevorzugt zwischen -20° und +20°, bevorzugter zwischen -5° und +5° liegt, zwischen der Mittelachse (A) und einer Achse (B) senkrecht zu der Öffnung (162) der Bodenfläche (161) definiert ist.

6. Ventilgehäuse für eine Messvorrichtung nach Anspruch 1, **dadurch gekennzeichnet, dass** das Mittelsegment (15) mindestens zwei Kanäle (91, 92), bevorzugt einen ersten Einlasskanal (91) und einen zweiten Auslasskanal (92), mit Öffnungen an der unteren Fläche (158) umfasst.

7. Ventilgehäuse für eine Messvorrichtung nach Anspruch 6, **dadurch gekennzeichnet, dass** die Bodenfläche (161) Nuten (165, 166, 167) umfasst.

8. Ventilgehäuse für eine Messvorrichtung nach Anspruch 1, **dadurch gekennzeichnet, dass** das Mittelsegment (15) durch eine Abdeckplatte (17) drehbar an dem Ventilkörper (16) montiert ist.

9. Ventilgehäuse für eine Messvorrichtung nach einem der vorhergehenden Ansprüche, **dadurch gekennzeichnet, dass** die Ventilanordnung (1) Schließmittel in Form eines Drehgriffs (4) umfasst.

10. Ventilgehäuse für eine Messvorrichtung nach einem der vorhergehenden Ansprüche, **dadurch gekennzeichnet, dass** das Drehventil Verriegelungsmittel (71) zum Verhindern einer unerwünschten Drehung des Mittelsegments (15) umfasst.

11. Ventilgehäuse für eine Messvorrichtung nach einem der vorhergehenden Ansprüche, **dadurch gekennzeichnet, dass** es eine Sicherheitsvorrichtung (72) aufweist, um ein Entfernen der Sonde (5) zu verhindern, während sich die Ventilanordnung in einer offenen Position befindet.

12. Ventilgehäuse für eine Messvorrichtung nach einem der vorhergehenden Ansprüche, **dadurch gekennzeichnet, dass** der Richtungssperrflansch (14) eine obere Fläche aufweist, wobei die obere Fläche ein abgestufter Bogen/Winkelmesser ist.

13. Ventilgehäuse für eine Messvorrichtung nach einem der vorhergehenden Ansprüche, **dadurch gekennzeichnet, dass** mindestens eine Dichtungsvorrichtung (181, 182, 183) zwischen dem Mittelsegment (15) und dem Ventilkörper (16) angeordnet ist, um eine Leckage aus dem Prozess (21) zu verhindern.

14. Ventilgehäuse für eine Messvorrichtung nach einem der vorhergehenden Ansprüche, **dadurch gekennzeichnet, dass** mindestens ein Ventilsitz (184) zwischen dem Mittelsegment (15) und dem Ventilkörper (16) angeordnet ist, um eine Leckage aus dem Prozess (21) zu verhindern.

## Revendications

1. Boîtier de vanne (1, 2) pour un dispositif de mesure,
lequel boîtier de vanne comprend un ensemble de vanne (1) et un ensemble de bride de montage (2),
lequel ensemble de bride de montage comprend une bride de montage (23) pouvant être fixée à une section de tuyau,
ledit ensemble de vanne (1) comprenant un corps de vanne (16), dans lequel le corps de vanne (16) a une surface inférieure (161) qui est agencée pour définir une surface limite d'un processus, ladite surface inférieure comprenant une ouverture (162) vers ledit processus,
ledit ensemble de vanne (1) ayant en outre un segment central (15) traversé par une cavité de sonde (151) pour recevoir un dispositif de mesure (5), et
un moyen de fermeture (4) pour ouvrir et fermer ladite vanne, dans lequel une bride de verrouillage de direction (14) est montée sur ledit ensemble de bride de montage (2),
ledit corps de vanne (16) est monté de manière rotative dans ledit assemblage de bride de montage (2), et
la bride de verrouillage de direction (14) est agencée pour verrouiller le corps de vanne (16) en position dans la bride de montage avec l'ouverture (162) du corps de vanne (16) étant agencée selon un angle souhaité β par rapport à un axe de référence perpendiculaire à un axe central (A) qui s'étend à travers ledit segment central et lequel axe central (A) est normal par rapport au plan de la bride de montage, et ledit segment central (15) est monté de manière rotative dans ledit corps de vanne (16) et le mouvement pour ouvrir/fermer ladite vanne est un mouvement rotatif dudit segment central (15) autour de l'axe central (A).

2. Boîtier de vanne pour un dispositif de mesure selon la revendication 1, **caractérisé en ce que** ledit segment central (15) et ledit corps de vanne (16) coopèrent par le segment central (15) étant adapté pour être inséré dans une cavité centrale (164) du corps de vanne (16) de telle sorte qu'une ouverture de ladite cavité de sonde (151) à travers le segment central (15) peut être positionnée à côté de ladite ouverture (162), définissant ainsi une position de mesure ouverte de l'ensemble de vanne.

3. Boîtier de vanne pour un dispositif de mesure selon la revendication 2, **caractérisé en ce que** ledit segment central (15) et ledit corps de vanne (16) coopèrent par le segment central (15) étant adapté pour être inséré dans une cavité centrale (164) du corps de vanne (16) de telle sorte que ladite ouverture (162) dudit corps de vanne (16) est recouverte et scellée par une surface inférieure (158) dudit segment central (15), définissant ainsi une position fermée de l'ensemble de vanne.

4. Boîtier de vanne pour un dispositif de mesure selon la revendication 3, **caractérisé en ce que** ladite surface inférieure (161) du corps de vanne (16) est une surface arquée et ladite surface inférieure (158) du segment central (15) est une surface arquée qui est agencée pour correspondre à ladite surface inférieure arquée (161).

5. Boîtier de vanne pour un dispositif de mesure selon la revendication 2, **caractérisé en ce qu'**un angle α qui est entre - 55° et 55°, de préférence entre -20° et +20°, de manière davantage préférée entre -5° et +5°, est défini entre l'axe central (A) et un axe (B) perpendiculaire à ladite ouverture (162) de ladite surface inférieure (161).

6. Boîtier de vanne pour un dispositif de mesure selon la revendication 1, **caractérisé en ce que** ledit segment central (15) comprend au moins deux canaux (91, 92), de préférence un premier canal d'entrée (91) et un deuxième canal de sortie (92), avec des ouvertures au niveau de ladite surface inférieure (158).

7. Boîtier de vanne pour un dispositif de mesure selon la revendication 6, **caractérisé en ce que** ladite surface inférieure (161) comprend des rainures (165, 166, 167).

8. Boîtier de vanne pour un dispositif de mesure selon la revendication 1, **caractérisé en ce que** ledit segment central (15) est monté de manière rotative sur ledit corps de vanne (16) par une plaque de recouvrement (17).

9. Boîtier de vanne pour un dispositif de mesure selon l'une quelconque des revendications précédentes, **caractérisé en ce que** ledit ensemble de vanne (1) comprend un moyen de fermeture sous la forme d'une poignée tournante (4).

10. Boîtier de vanne pour un dispositif de mesure selon l'une quelconque des revendications précédentes, **caractérisé en ce que** ladite vanne tournante comprend un moyen de verrouillage (71) pour empêcher une rotation indésirable du segment central (15).

11. Boîtier de vanne pour un dispositif de mesure selon l'une quelconque des revendications précédentes, **caractérisé en ce qu'**il a un dispositif de sécurité (72) pour empêcher un retrait de la sonde (5) lorsque l'ensemble de vanne est dans une position ouverte.

12. Boîtier de vanne pour un dispositif de mesure selon l'une quelconque des revendications précédentes, **caractérisé en ce que** ladite bride de verrouillage de direction (14) a une surface supérieure, laquelle surface supérieure est un arc/rapporteur gradué.

13. Boîtier de vanne pour un dispositif de mesure selon l'une quelconque des revendications précédentes, **caractérisé en ce qu'**au moins un dispositif d'étanchéité (181, 182, 183) est interposé entre ledit segment central (15) et ledit corps de vanne (16) afin d'éviter une fuite du processus (21).

14. Boîtier de vanne pour un dispositif de mesure selon l'une quelconque des revendications précédentes, **caractérisé en ce qu'**au moins un siège de vanne (184) est interposé entre ledit segment central (15) et ledit corps de vanne (16) afin d'empêcher une fuite du processus (21).
